# EUROPÄISCHE PATENTSCHRIFT

(11) **EP 1 487 186 B1**
(45) Veröffentlichungstag und Bekanntmachung des Hinweises auf die Patenterteilung: **15.03.2017**
(21) Anmeldenummer: 03013173.4
(22) Anmeldetag: 11.06.2003
(51) Int. Cl.: H04M 7/00, H04L 29/06, H04L 29/14

(54) **Redundanten Betrieb eines Endgerätes an zumindest zwei Kommunikationsknoten**
Redundant operation of an end terminal relative to at least two communication nodes
Opération redondante d'un terminal de communication par rapport à au moins deux noeuds de communication

(43) Veröffentlichungstag der Anmeldung: 15.12.2004
(73) Patentinhaber: Unify GmbH & Co. KG, 80807 München (DE)
(72) Erfinder: Berndt, Stefan, 59199 Bönen (DE); Bozionek, Bruno, 33178 Borchen (DE); Hanna, Thomas, 32758 Detmold (DE); Hinz, Bernd, 33378 Rheda-Wiedenbrück (DE); Laux, Thorsten, 59558 Lippstadt (DE); Neuhaus, Ralf, 44534 Lünen (DE); Scheering, Christian Dr., 33689 Bielefeld (DE); Uecker, Rainer, 45470 Mühlheim (DE); Zimmermann, Rainer, 33106 Paderborn (DE)
(74) Vertreter: Fritzsche, Thomas

(56) Entgegenhaltungen:
- EP-A- 1 056 254
- US-A1- 2003 012 178
- US-B1- 6 374 302
- Cisco Systems, Inc.: "Cisco IP TelephonyNetwork Design Guide", 30 June 2000 (2000-06-30), Cisco Systems, Inc., San Jose pages 3-1-3-22, * pages 3-1 - pages 3-22 *

## Beschreibung

Die Erfindung betrifft ein Verfahren zum wechselweisen Betrieb eines Endgerätes an zumindest zwei Kommunikationsknoten und eine Kommunikationsanordnung zur Durchführung des Verfahrens.

In Kommunikationsnetzwerken sind zumeist eine Vielzahl von Endgeräten und mehrere Kommunikationsknoten angeordnet. In leitungsvermittelten Kommunikationsanordnungen, beispielsweise in ISDN-Systemen, ist dabei jedes Endgerät jeweils an einem Kommunikationsknoten (Vermittlungseinrichtung) fest angemeldet und damit diesem fest zugeordnet. Diese Zuordnung ist dabei durch die Verkabelung gegeben, so dass ein Endgerät, beispielsweise ein Telefon- oder ein Telefaxgerät, genau an derjenigen Vermittlungseinrichtung angemeldet ist, mit der dieses Endgerät auch physikalisch verbunden ist.

Auch die Endgeräte in Sprachdatennetzen, häufig auch als Voice-over-IP-Netze (VoIP = Voice-over-Internet-Protocol) bezeichnet, sind einem der Kommunikationsknoten in dem jeweiligen Sprachdatennetz fest zugeordnet und bei diesen angemeldet. Solche Sprachdatennetze verwenden beispielsweise das H.323- (ITU-T-H.323) oder das SIP-Protokoll (SIP = Session Initiation Protocol) für die Signalisierung. In einem Sprachdatennetz kann - im Gegensatz zu den leitungsvermittelten Kommunikationsnetzwerken - prinzipiell jede Netzwerkkomponente, also jedes Endgerät und jeder Kommunikationsknoten, mit jeder anderen Netzwerkkomponente direkt Daten (insbesondere Sprachdaten) austauschen. Eine feste Zuordnung der Netzwerkkomponenten zueinander, wie sie in den leitungsvermittelten Kommunikationsnetzwerken aufgrund der Verkabelung gegeben ist, ist in Sprachdatennetzen weder zwingend noch erwünscht.

Die Endgeräte in Sprachdatennetzen werden häufig auch als "Clients" bezeichnet, weil sich diese Endgeräte signifikant von leitungsvermittelten Endgeräten unterscheiden. So können sie beispielsweise als Telefon mit Netzwerkanschluss oder aber auch als Computer mit einer darauf installierten Kommunikationssoftware ausgestaltet sein. Die Kommunikationsknoten in den Sprachdatennetzen werden häufig auch als "Gatekeeper" (H.323) oder "Proxy" bzw. "SIP-Proxy" (SIP-Protokoll) bezeichnet, da die Funktion dieser Kommunikationsknoten neben der Verbindungs-Initiierung zwischen den Clients auch die Zugangskontrolle zu Übertragungseinrichtungen zu anderen Netzwerken, den sog. Gateways, bildet. Im Folgenden wird zur Vereinfachung für Gatekeeper und (SIP-)Proxy einheitlich der Begriff "Gatekeeper" verwendet.

In den Kommunikationsknoten der Sprachdatennetze sind Konfigurationsdaten über diejenigen Endgeräte gespeichert, die an diesem Kommunikationsknoten angemeldet sind. Das sind beispielsweise Informationen über die Berechtigungen des jeweiligen Clients bzw. des Benutzers des jeweiligen Clients, Zugehörigkeiten zu Anrufübernahme-Gruppen, die Rufnummer des Clients etc.. Der Kommunikationsknoten (Gatekeeper), an dem ein Client angemeldet ist, wird auch als "Heimatknoten" oder "Home-Gatekeeper" bezeichnet. Soll nun dieser Client an einem anderen Kommunikationsknoten betrieben werden, wird das entsprechende Endgerät (Client) bei dem Heimatknoten abgemeldet und bei einem anderen Kommunikationsknoten, bei nur temporärem Wechsel auch als "Adoptiv-Gatekeeper" bezeichnet, angemeldet. Falls nach der Anmeldung die in dem Heimatknoten gespeicherten Konfigurationsdaten zu dem "Adoptiv-Gatekeeper" übertagen werden, kann das Endgerät an dem Adoptiv-Gatekeeper in der gleichen Weise betrieben werden, wie an seinem Heimatknoten. Falls dieser "Umzug" zu dem Adoptiv-Gatekeeper nicht nur vorübergehend (temporär), sondern dauerhaft erfolgt, wird der Adoptiv-Gatekeeper nunmehr zu dem neuen Heimatknoten für das Endgerät.

Solche wie die zuvor beschriebenen Umzüge von Endgeräten von einem Kommunikationsknoten zu einem anderen Kommunikationsknoten werden oftmals veranlasst, um eine gleichmäßige Auslastung ("load balancing") der Kommunikationsknoten in einem Kommunikationsnetzwerk zu gewährleisten. Ein solcher Umzug kann jedoch auch "unplanmäßig" notwendig sein, wenn zum Beispiel der Heimatknoten eines Endgerätes ausfällt oder aufgrund einer Störung in dem Kommunikationsnetzwerk nicht mehr erreichbar ist. Dann muss entweder temporär oder dauerhaft ein Ersatz-Kommunikationsknoten, also ein Adoptiv-Gatekeeper, die Funktion des ursprünglichen Heimatknotens übernehmen. Die Druckschrift US 6,374,302 B1 - "Method And System To Provide An Action Control Point Master Gatekeeper" zeigt ein Kommunikationsnetzwerk, in dem mehrere Kommunikationsknoten (Gatekeeper) mit jeweils einer Anzahl zugeordneter Endgeräte angeordnet sind. Dabei bildet jeder der Kommunikationsknoten mit seiner Gruppe Endgeräte eine eigene Zone. Für Kommunikationsverbindungen zwischen den Zonen wird ein zentraler Adressierungsserver verwendet, aus dem die jeweiligen Kommunikationsknoten jeweils die Adressen und Zugangsparameter der anderen Kommunikationsknoten abrufen. Für den Adressierungsserver kann ein zweiter "Backup-Adressierungsserver" vorhanden sein, der bei Ausfall des Adressierungsservers dessen Funktionalität ersatzweise ausübt.

Von "Cisco IP-Telefonie-Design-Guide" ist eine Topologie mit einer zentralen Datenbank 'Publisher' und Teilnehmerdatenbanken bekannt. Die Konfigurationsdaten der Endgeräte wird über die Datenbanken kopiert.

Bei den bekannten Kommunikationsnetzwerken hat sich als nachteilig erwiesen, dass der Umzug von Endgeräten von einem Kommunikationsknoten zu einem anderen Kommunikationsknoten manuell gesteuert werden muss. Zwar sind rechnergestützte Hilfsmittel bekannt, um nach einer manuellen Aufforderung die erforderlichen Schritte, beispielsweise die Übertragung der Konfigurationsdaten von einem Kommunikationsknoten zu einem anderen Kommunikationsknoten, automatisiert vorzunehmen, aber die Entscheidung darüber, welches Endgerät wann zu welchem Kommunikationsknoten wechselt, muss manuell getroffen und in die Systemtechnik eingegeben werden. Insbesondere muss bei einem Wechsel in das betroffene Endgerät oder die betroffenen Endgeräte die Netzwerkadresse des "neuen" Kommunikationsknotens manuell eingefügt werden. Ein weiterer Nachteil ist, dass bei einem nur temporären Wechsel des Kommunikationsknotens, beispielsweise in Folge einer Störung, auch die abschließende Wiederherstellung des Ursprungszustands, also der erneute Umzug des Endgerätes zu seinen ursprünglichen Heimatknoten, manuell initiiert und ausgeführt werden muss.

Die Aufgabe der Erfindung ist es, ein Verfahren vorzuschlagen, mit dem der Wechsel von Endgeräten zwischen zwei Kommunikationsknoten mit nur geringem oder ohne manuellen Aufwand durchführbar ist, und eine Kommunikationsanordnung vorzuschlagen, in der der Wechsel von Endgeräten zwischen Kommunikationsknoten mit möglichst geringem manuellen Aufwand erfolgt.

Die Aufgabe wird für das Verfahren durch die Merkmale des Patentanspruchs 1 und für die Anordnung durch die Merkmale des Patentanspruchs 14 gelöst.

Die Lösung sieht für das Verfahren vor, dass die Erreichbarkeit des ersten Kommunikationsknotens überwacht wird, dass bei Nichterreichbarkeit des ersten Kommunikationsknotens eine Statusinformation über die Nichterreichbarkeit erzeugt wird, und dass aufgrund der Statusinformation eine logische Verbindung zwischen dem Endgerät und dem zweiten Kommunikationsknoten aufgebaut wird und der Betrieb des Endgerätes automatisch an dem zweiten Kommunikationsknoten, dem eine zweite Adresse zugeordnet ist, erfolgt. Dabei sind in dem ersten Kommunikationsknoten das Endgerät betreffende zum Betrieb des Endgerätes notwendige Konfigurationsdaten gespeichert, wobei die notwendigen Konfigurationsdaten zum Betrieb des Endgerätes an einem zweiten Kommunikationsknoten zu dem zweiten Kommunikationsknoten hin übertragen werden. Dadurch wird sichergestellt, dass bei Nichterreichbarkeit des Heimat-Kommunikationsknotens des Endgerätes dieses Endgerät in möglichst kurzer Zeit wieder betriebsfähig ist, ohne dass dafür manuelle Eingaben erforderlich sind. Durch Übertragung der Konfigurationsdaten zu dem zweiten Kommunikationsknoten kann das von dem ersten Kommunikationsknoten zum zweiten Kommunikationsknoten gewechselte Endgerät mit seiner vollen Funktionalität weiter betrieben werden. Wenn dabei neben den notwendigen Konfigurationsdaten auch darüber hinaus gehende endgerätespezifische Konfigurationsdaten übermittelt werden, können auch sog. "Komfort-Leitungsmerkmale" des betroffenen Endgerätes weiter benutzt werden.

Die Lösung sieht für die Kommunikationsanordnung vor, dass in dem Kommunikationsnetzwerk ein Verwaltungs-Server angeordnet ist, dass in dem Verwaltungs-Server eine Kopie der notwendigen Konfigurationsdaten gespeichert ist, dass in dem Kommunikationsnetzwerk eine Überwachungsvorrichtung vorhanden ist, die die Erreichbarkeit des ersten Kommunikationsknotens überwacht, dass Mittel vorgesehen sind zur Übertragung der Kopie der notwendigen Konfigurationsdaten zu einem zweiten Kommunikationsknoten im Falle der nicht Erreichbarkeit des ersten Kommunikationsknotens, so dass der Betrieb des Endgerätes bei Nichterreichbarkeit des ersten Kommunikationsknotens an dem zweiten Kommunikationsknoten erfolgt. Durch diese Anordnung wird erreicht, dass der Betrieb des Endgerätes an dem zweiten Kommunikationsknoten in der gleichen Weise erfolgen kann, wie er an dem ersten Kommunikationsknoten vor dem Wechsel des Kommunikationsknotens erfolgte.

Das Verfahren ist durch die kennzeichnenden Merkmale der abhängigen Patentansprüche 2 bis 13 vorteilhaft ausgestaltet. Die für das Verfahren beschriebenen Vorteile gelten dabei sinngemäß auch für die Anordnung.

Wenn als Kommunikationsnetzwerk ein Sprachdatennetz verwendet wird, als Endgerät ein Sprachdaten-Endgerät verwendet wird, und wenn als Kommunikationsknoten Gatekeeper verwendet werden, dann entfällt die Notwendigkeit einer manuellen Anpassung der Verkabelung des Kommunikationsnetzwerkes.

Die Konfigurationsdaten für ein Endgerät gehen auch bei einem Totalausfall des ersten Kommunikationsknotens nicht verloren, wenn in dem Endgerät eine Kopie der Konfigurationsdaten gespeichert wird, und wenn nach der Anmeldung des Endgeräts bei dem zweiten Kommunikationsknoten die Kopie der Konfigurationsdaten von dem Endgerät zu dem zweiten Kommunikationsknoten übertragen wird und von dem zweiten Kommunikationsknoten zum Betrieb des Endgerätes verwendet wird. Bei dieser Speicherung der Konfigurationsdaten in dem Endgerät selber erübrigt sich darüber hinaus der Betrieb einer zentralen Datenbank für Konfigurationsdaten in dem Kommunikationsnetzwerk. Mit Wegfall einer zentralen Datenbank kann auch auf einen (zentralen) Verwaltungs-Server verzichtet werden.

Das Endgerät kann bei Nichterreichbarkeit des ersten Kommunikationsknotens ohne Rückfrage bei einer weiteren Instanz und damit ohne Zeitverzug zu einem zweiten Kommunikationsknoten wechseln, indem in dem Endgerät die zweite Adresse gespeichert wird, und indem das Endgerät sich bei Nichterreichbarkeit des ersten Kommunikationsknotens anhand der gespeicherten zweiten Adresse bei dem zweiten Kommunikationsknoten anmeldet.

In einem Kommunikationsnetzwerk mit vielen Kommunikationsknoten steigt die Wahrscheinlichkeit der erfolgreichen Anmeldung bei einem Adoptiv-Kommunikationsknoten, indem in dem Kommunikationsnetzwerk weitere Kommunikationsknoten mit jeweils einer eigenen Adresse angeordnet sind, wobei in dem Endgerät eine sortierte Liste mit den Adressen der Kommunikationsknoten gespeichert wird, und wobei bei Nichterreichbarkeit des ersten Kommunikationsknotens die Liste der Kommunikationsknoten so lange durch Anmeldeversuche des Endgerätes abgearbeitet wird, bis eine Anmeldung bei einem der Kommunikationsknoten erfolgt ist. Wenn dabei die verschiedenen Kommunikationsknoten mit unterschiedlicher Leistungsfähigkeit ausgestattet sind, wird die Liste dabei idealer Weise nach der Leistungsfähigkeit der Kommunikationsknoten in der Weise sortiert, dass zuerst ein Anmeldeversuch bei einem sehr leistungsfähigen Kommunikationsknoten erfolgt, um bei Nichterreichbarkeit dieses zweiten Kommunikationsknotens unter Inkaufnahme von Leistungseinbußen eine Anmeldung bei weniger leistungsfähigen Kommunikationsknoten zu versuchen.

In dem Endgerät genügt als Vorsorge für den Fehlerfall das Einspeichern einer einzigen weiteren Adresse, wenn in dem Kommunikationsnetzwerk ein Verwaltungs-Server mit einer Adresse betrieben wird, in dem die zweite Adresse gespeichert ist, wobei in dem Endgerät die Adresse dieses Verwaltungs-Servers gespeichert wird, bei Nichterreichbarkeit des ersten Kommunikationsknotens von dem Endgerät eine Abfragenachricht dem Verwaltungs-Server gesendet wird, von dem Verwaltungs-Server zu dem Endgerät in einer Antwortnachricht die zweite Adresse übermittelt wird, und wobei sich das Endgerät anhand der übermittelten zweiten Adresse bei dem zweiten Kommunikationsknoten anmeldet. Bei dieser Vorgehensweise sinkt auch der administrative Aufwand in dem Kommunikationsnetzwerk, wenn Kommunikationsknoten hinzugefügt oder entfernt werden.

Die Speicherung von Konfigurationsdaten bzw. deren Kopie in dem Endgerät kann vermieden werden, indem in den Verwaltungs-Server eine Kopie der Konfigurationsdaten gespeichert wird, und indem nach Anmeldung des Endgerätes bei dem zweiten Kommunikationsknoten die Kopie der Konfigurationsdaten von dem Verwaltungs-Server zu dem zweiten Kommunikationsknoten übertragen wird und von dem zweiten Kommunikationsknoten zum Betrieb des Endgerätes verwendet wird.

Die Konfiguration einer neuen Kommunikationsknoten-Adresse in dem Endgerät kann bei dem Wechsel des Kommunikationsknotens vermieden werden, wenn in dem Kommunikationsnetzwerk ein Verwaltungs-Server betrieben wird, in dem eine Kopie der Konfigurationsdaten und die erste Adresse gespeichert wird, wobei von dem Verwaltungs-Server die Erreichbarkeit des ersten Kommunikationsknoten überwacht wird, und wobei von dem Verwaltungs-Server bei Nichterreichbarkeit des ersten Kommunikationsknotens die Kopie der Konfigurationsdaten und die gespeicherte erste Adresse zu dem zweiten Kommunikationsknoten übertragen wird. Dabei wird dem zweiten Kommunikationsknoten die erste Adresse zugewiesen, und von dem zweiten Kommunikationsknoten wird anhand der empfangenen Kopie der Konfigurationsdaten für das Endgerät durch Zuweisung der ersten Adresse die Funktion des ersten Kommunikationsknotens ausgeübt. Die Programmierung des Endgerätes ist bei dieser Vorgehensweise nicht von dem Wechsel des Kommunikationsknotens betroffen.

Wenn die Konfigurationsdaten in dem ersten Kommunikationsknoten in einem ersten Format und in dem zweiten Kommunikationsknoten in einem zweiten Format verwendet werden, und die zu dem zweiten Kommunikationsknoten übertragenen Konfigurationsdaten vor der Übertragung von dem ersten Format in das zweite Format umgewandelt werden, können Kommunikationsknoten unterschiedlichen Typs zum Betrieb des Endgerätes genutzt werden.

Ein Wechsel des Kommunikationsknotens ohne Einfluss auf das Endgerät ist besonders einfach zu bewerkstelligen, wenn als die Kommunikationsknoten jeweils Kommunikationsbaugruppen einer modular aufgebauten Kommunikationsanlage verwendet werden, wenn als Verwaltungs-Server eine Steuerungsbaugruppe der modular aufgebauten Kommunikationsanlage verwendet wird, und wenn nach der Inbetriebnahme der Kommunikationsbaugruppen jeweils die Übertragung der Konfigurationsdaten und der jeweiligen Adresse von der Steuerungsbaugruppe zu der jeweiligen Kommunikationsbaugruppe erfolgt.

Der ursprüngliche Zustand des Kommunikationsnetzwerkes wird automatisch wiederhergestellt, indem bei Betrieb des Endgerätes an dem zweiten Kommunikationsknoten die Nichterreichbarkeit des ersten Kommunikationsknotens überwacht wird, und indem das Endgerät bei dem zweiten Kommunikationsknoten abgemeldet und wieder bei dem ersten Kommunikationsknoten angemeldet wird, nachdem der erste Kommunikationsknoten wieder erreichbar ist.

Eine separate Überwachungsinstanz in dem Kommunikationsnetzwerk kann entfallen, wenn die Überwachung durch den zweiten Kommunikationsknoten oder durch das Endgerät selber erfolgt.

Nach Wiederherstellung der Erreichbarkeit des ersten Kommunikationsknotens kann ein erneuter Wechsel unterbleiben, wenn beim Betrieb des Endgerätes an dem zweiten Kommunikationsknoten der erste Kommunikationsknoten durch den zweiten Kommunikationsknoten ersetzt wird. Damit wird nunmehr der ursprünglich erste Kommunikationsknoten zu einem zweiten Kommunikationsknoten.

Ausführungsbeispiele des erfindungsgemäßen Verfahrens sind nachfolgend anhand der Zeichnungen erläutert und dienen gleichzeitig der Erläuterung eines Ausführungsbeispiels der erfindungsgemäßen Anordnung.

Dabei zeigen:
- Figur 1: ein Kommunikationsnetzwerk mit einer Datenleitung, einem Endgerät und zwei Kommunikationsknoten,
- Figur 2: ein Datennetz mit einer Datenleitung, einem Endgerät, zwei Kommunikationsknoten und einem Verwaltungs-Server,
- Figur 3: ein Kommunikationsnetzwerk mit einer Datenleitung, einem Endgerät und einer modular aufgebauten Kommunikationsanlage mit zwei Kommunikationsbaugruppen und einer Steuerungsbaugruppe, und
- Figur 4: ein verteiltes Kommunikationsnetzwerk mit einer Zentrale, zwei Filialen, einem Datennetz, einem leitungsvermittelten Netzwerk, zwei Endgeräten und drei Kommunikationsknoten.

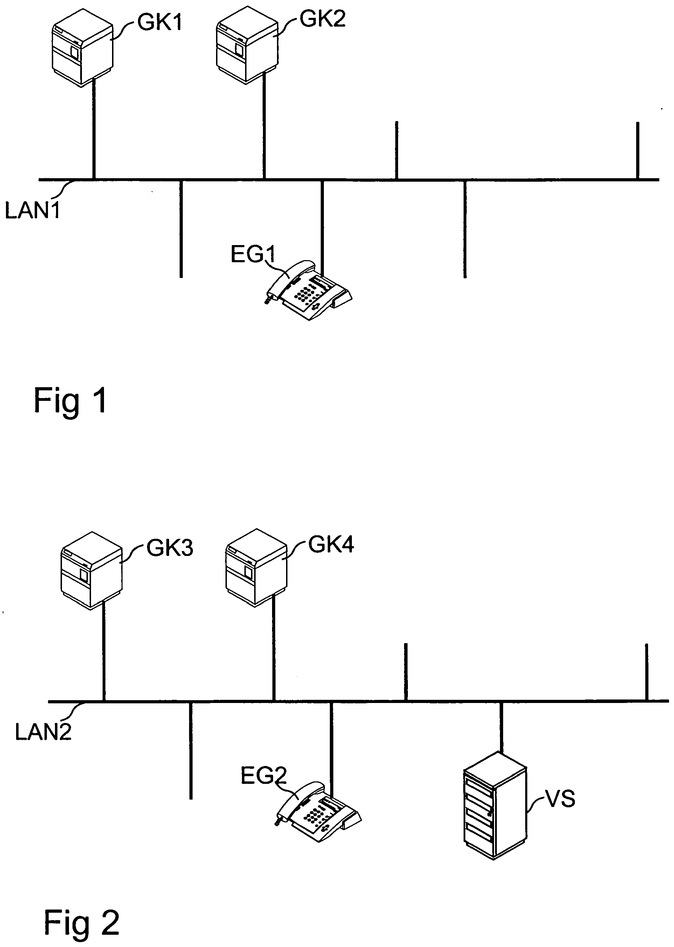

In Fig. 1 ist als erstes Ausführungsbeispiel ein Kommunikationsnetzwerk gezeigt, welches aus einer Datenleitung LAN1, zwei Kommunikationsknoten GK1, GK2 und einem Endgerät EG1 besteht. In dem gezeigten Kommunikationsnetzwerk sind noch weitere Kommunikationsknoten und Endgeräte angeordnet; in der Figur 1 sind jedoch nur die zur Erläuterung des Ausführungsbeispiels benötigten Netzwerkkomponenten dargestellt. Bei den Kommunikationsknoten GK1, GK2 handelt es sich um Gatekeeper in einer VoIP-Kommunikationsanordnung, und bei dem Endgerät EG1 handelt es sich um ein Sprachdaten-Endgerät, also um einen VoIP-Client. Die Kommunikationsknoten GK1, GK2 und das Endgerät EG1 tauschen Daten, insbesondere Sprachdaten, über die Datenleitung LAN1 miteinander aus. Die Datenleitung LAN1 ist Teil eines paketvermittelten Netzwerkes, in dem die Daten nach dem Internet-Protokoll ausgetauscht werden. Dabei werden Daten zu sog. Datenpaketen zusammengefasst, die mit der Adresse (IP-Adresse) des jeweiligen Empfängers adressiert sind. Zu diesem Zweck ist dem Kommunikationsknoten GK1 eine erste Adresse, dem Kommunikationsknoten GK2 eine zweite Adresse und dem Endgerät EG1 eine Endgeräte-Adresse zugeordnet.

Das Endgerät EG1 wird an dem Kommunikationsknoten GK1 betrieben, es ist also an dem Kommunikationsknoten GK1 angemeldet. In dem Kommunikationsknoten GK1 sind Konfigurationsdaten gespeichert, die das Endgerät EG1 betreffen. Zu diesen Konfigurationsdaten gehören beispielsweise Angaben über die Berechtigung des Endgerätes EG1, externe Telefongespräche zu führen, Angaben über Gruppenzugehörigkeiten und andere Informationen. Diese Konfigurationsdaten sind in dem Kommunikationsknoten GK1 zu einem Konfigurationsdatensatz zusammengefasst, von dem in regelmäßigen Zeitabständen eine aktuelle Kopie erstellt wird, wobei diese Kopie jeweils zu dem Endgerät EG1 übertragen wird. In einem gesonderten Speicherbereich des Endgerätes EG1 wird diese Kopie gespeichert. Falls sich eine neu erstellte Kopie nicht von der zuvor erstellten und übertragenen Kopie unterscheidet, unterbleibt die erneute Übertragung der Konfigurationsdaten zu dem Endgerät.

Ebenfalls in dem Endgerät EG1 gespeichert ist eine Liste aller Kommunikationsknoten GK1, GK2 des Kommunikationsnetzwerkes, die von dem Endgerät EG1, verwendet werden können. Diese Liste ist priorisiert, d.h., dass an erster Stelle der Liste der Kommunikationsknoten GK1, der als Heimatknoten fungiert, verzeichnet ist, an zweiter Stelle der als best-geeigneter Ersatz-Kommunikationsknoten vorgesehene Kommunikationsknoten GK2 und an den weiteren Stellen der Liste andere, in der Figur 1 nicht eingezeichnete Kommunikationsknoten des Kommunikationsnetzwerkes.

Bei den Konfigurationsdaten kann zwischen notwendigen Konfigurationsdaten und vollständigen Konfigurationsdaten unterschieden werden. Notwendige Konfigurationsdaten sind solche Konfigurationsdaten, die zwingend erforderlich sind, damit ein Endgerät an einem Kommunikationsknoten mit einer Basisfunktionalität, also zur Ausübung einer reinen Telephonie-Funktion, betrieben werden kann. Vollständige Konfigurationsdaten umfassen darüber hinaus solche Einstellungen und Informationen, die zur Realisierung von sog. Komfort-Leistungsmerkmalen erforderlich sind, beispielsweise für die Konfiguration von Anrufübernahmegruppen, persönliche Telefonverzeichnisse etc.. Im vorliegenden Ausführungsbeispiel werden die vollständigen Konfigurationsdaten als Kopie in dem Endgerät EG1 gespeichert.

Das Endgerät EG1 überprüft in regelmäßigen Zeitabständen, ob der Kommunikationsknoten GK1 erreichbar ist. Dazu ist das Endgerät EG1 mit einer Überwachungseinrichtung ausgestattet. Falls in dem Kommunikationsknoten GK1 oder in der Verbindung zwischen dem Endgerät EG1 und dem Kommunikationsknoten GK1 ein Fehler auftritt, stellt das Endgerät EG1 den Fehlerfall "Nichterreichbarkeit" fest. In dem Endgerät EG1 wird eine dem Fehlerfall entsprechende Statusinformation erzeugt, und die Anmeldefunktion des Endgerätes EG1 versucht infolge dieser Statusinformation, sich bei einem anderen Kommunikationsknoten des Kommunikationsnetzwerkes anzumelden. Dazu ruft das Endgerät EG1 die in ihm gespeicherte Liste verfügbarer Kommunikationsknoten auf und liest aus dieser Liste die Netzwerkadresse des priorisierten Ersatzsystems, nämlich des Kommunikationsknotens GK2, aus. Das Endgerät EG1 versendet nun zu dem Kommunikationsknoten GK2 eine Anmeldenachricht. Der Kommunikationsknoten GK2 stellt fest, dass er über ausreichende Kapazitätsreserven verfügt und dass das Endgerät EG2 dazu berechtigt ist, sich bei dem Kommunikationsknoten GK2 anzumelden. Also versendet der Kommunikationsknoten GK2 eine Bestätigungsnachricht zu dem Endgerät EG1, welches als Antwort die als Kopie gespeicherten Konfigurationsdaten zu dem Kommunikationsknoten GK2 versendet. Zu dieser Übermittlung der Konfigurationsdaten umfasst das Endgerät EG1 als Übertragungsmittel ein Programm mit entsprechend ausgebildeten Kommunikations-Subroutinen. Der Kommunikationsknoten GK2 konfiguriert sich anhand der empfangenen Konfigurationsdaten bezogen auf das Endgerät EG1 in der gleichen Weise, wie zuvor der Kommunikationsknoten GK1 konfiguriert war.

Der Kommunikationsknoten GK2 überprüft nun seinerseits in regelmäßigen Zeitabständen, ob der Kommunikationsknoten GK1, dessen Endgerät EG1 er als "Gast" verwaltet, wieder einsatzfähig ist, bzw. ob die Verbindung zu diesem Kommunikationsknoten GK1 wieder besteht. Sobald dies der Fall ist, entzieht der Kommunikationsknoten GK2 dem Endgerät EG1 die Berechtigung zur Nutzung des Kommunikationsknotens GK2, was der Abmeldung des Endgerätes EG1 bei dem Kommunikationsknoten GK2 entspricht. Das Endgerät EG1 stellt in Folge dessen aufgrund der regelmäßigen Überprüfungen, ob der verwendete Kommunikationsknoten GK2 erreichbar ist, wiederum den Fehlerfall der Nichterreichbarkeit fest und beginnt wiederum anhand der gespeicherten, sortierten (priorisierten) Liste, einen verwendbaren Kommunikationsknoten zu finden. Da der Listeneintrag mit der höchsten Priorität der Eintrag des Kommunikationsknotens GK1 ist, erfolgt wiederum eine Anmeldung des Endgerätes EG1 bei dem Kommunikationsknoten GK1, wodurch der ursprüngliche Zustand wieder hergestellt ist.

Alternativ kann auch das Endgerät EG1 selber in regelmäßigen Zeitabständen prüfen, ob der Kommunikationsknoten GK1 bzw. die Verbindung zu diesem Kommunikationsknoten GK1 wiederhergestellt ist, und sich nach der Wiederherstellung von dem ersatzweise verwendeten Kommunikationsknoten GK2 abmelden und bei dem Kommunikationsknoten GK1 wieder anmelden.

Alternativ zu der zuvor beschriebenen Wiederherstellung des Ursprungszustandes können die Komponenten des Kommunikationsnetzwerkes auch so programmiert sein, dass ein Wechsel des Endgerätes EG1 von dem Kommunikationsknoten GK2 zurück zu dem Kommunikationsknoten GK1 nicht mehr erfolgt, sondern dass der Kommunikationsknoten GK2 nunmehr den Heimat-Kommunikationsknoten des Endgerätes EG1 darstellt und der ursprüngliche Heimat-Kommunikationsknoten GK1 nunmehr zu einem entsprechend priorisierten Ersatz-Kommunikationsknoten wird.

In der Liste, die in dem Endgerät EG1 gespeichert ist, können auch solche Kommunikationsknoten verzeichnet sein, die einen geringeren Leistungsumfang besitzen als der Heimat-Kommunikationsknoten GK1. Diese Kommunikationsknoten sind in der Liste zwar regelmäßig mit einer niedrigen Priorität einsortiert, aber bei einer Nicht-Erreichbarkeit höher priorisierter Kommunikationsknoten können auch solche weniger leistungsfähige Kommunikationsknoten zum Einsatz gelangen. In diesen Fällen können nicht alle von dem Endgerät übertragenen Konfigurationsdaten zur Konfiguration des ersatzweise verwendeten Kommunikationsknotens verwendet werden, sondern nur solche, die durch das Leistungsspektrum des nunmehr verwendeten Kommunikationsknotens realisierbar sind.

In der Figur 2 ist als zweites Ausführungsbeispiel ein Kommunikationsnetzwerk gezeigt, welches dem Kommunikationsnetzwerk aus Figur 1 ähnlich ist und welches ebenfalls mit einer Datenleitung LAN2 ausgerüstet ist. Über die Datenleitung LAN2 sind das Endgerät EG2, die Kommunikationsknoten GK3, GK4 und der Verwaltungs-Server VS miteinander verbunden. Analog zu dem Ausführungsbeispiel aus Figur 1 sind den Komponenten des hier gezeigten Kommunikationsnetzwerkes jeweils Netzwerkadressen zugeordnet.

Das Endgerät EG2 wird an dem Kommunikationsknoten GK3 betrieben. Der Kommunikationsknoten GK4 soll von dem Endgerät EG2 in solchen Fällen verwendet werden, in denen der Kommunikationsknoten GK3 aufgrund einer Störung nicht erreichbar ist. In dem Endgerät EG2 ist dazu die Netzwerkadresse des Verwaltungs-Servers VS gespeichert.

Der Kommunikationsknoten GK4 ist als sog. "passives System" in dem Kommunikationsnetzwerk angeordnet. Das bedeutet, dass im störungsfreien Fall der Kommunikationsknoten GK4 von keinem Endgerät des Kommunikationsnetzwerkes verwendet wird, sondern dieser nur als Ersatzsystem bereitgehalten wird. In dem Kommunikationsnetzwerk können neben dem aktiven Kommunikationsknoten GK3 eine größere Anzahl weiterer aktiver Kommunikationsknoten und auch weitere passive Kommunikationsknoten angeordnet sein; die Menge aller passiven Kommunikationsknoten wird auch als "Backup-Pool" bezeichnet.

Der in dem Kommunikationsnetzwerk angeordnete Verwaltungs-Server VS umfasst eine Datenbank, in der die Konfigurationsdaten aller aktiver Kommunikationsknoten GK3 des Kommunikationsnetzwerkes in Kopie gespeichert sind. Dazu findet in regelmäßigen Zeitabständen ein Datenabgleich zwischen den aktiven Kommunikationsknoten und dem Verwaltungs-Server VS statt.

Während das Endgerät EG2 an seinem Heimat-Kommunikationsknoten GK3 angemeldet ist, wiederholt bzw. erneuert das Endgerät EG2 in regelmäßigen Zeitabständen seine Anmeldung bei dem Kommunikationsknoten GK3. Diese zyklische Wiederholung der Registrierung ist in Sprachdaten-Kommunikationsnetzwerken nach dem H.323-Standard auch als "Lightweight-Registration" bekannt. Sobald ein solcher wiederholter Anmeldevorgang aufgrund einer Störung der Datenleitung LAN2 oder des Kommunikationsknotens GK3 nicht erfolgen kann, erkennt das Endgerät EG2 den Fehlerfall "Nichterreichbarkeit", erzeugt eine dementsprechende Statusinformation und sendet diese zu dem Verwaltungs-Server VS, dessen Adresse in dem Endgerät EG2 gespeichert ist. Der Verwaltungs-Server VS überprüft nun, ob der Kommunikationsknoten GK3 tatsächlich nicht erreichbar ist, und bestimmt, falls ja, einen Ersatz-Kommunikationsknoten, im vorliegenden Ausführungsbeispiel den Kommunikationsknoten GK4. Der Verwaltungs-Server VS überträgt nun zu dem Kommunikationsknoten GK4 die in seiner Datenbank gespeicherten Konfigurationsdaten des Kommunikationsknotens GK3. Anhand dieser Konfigurationsdaten konfiguriert sich der Konfigurationsknoten GK4 in der gleichen Weise, wie zuvor der Kommunikationsknoten GK3 konfiguriert war, und wird im Anschluss daran zu einem aktiven Kommunikationsknoten. Durch Übersenden einer Testnachricht zu den Kommunikationsknoten GK4 stellt der Verwaltungs-Server VS dessen Betriebsbereitschaft fest und übermittelt zu dem Endgerät EG2 die Netzwerkadresse des Kommunikationsknotens GK4. Das Endgerät EG2 registriert nun den Kommunikationsknoten GK4 als ihm zugeordneter Heimat-Kommunikationsknoten und meldet sich bei diesem Kommunikationsknoten GK4 an.

Falls der Kommunikationsknoten GK4 den identischen oder sogar einen besseren Leistungsumfang als der Kommunikationsknoten GK3 bietet, bleibt der Kommunikationsknoten GK4 auch nach Wiederherstellung der Erreichbarkeit des Kommunikationsknotens GK3 aktiver Kommunikationsknoten, während der nun wiederhergestellte Kommunikationsknoten GK3 zu einem passiven, also zu einem Ersatz-Kommunikationsknoten wird. Falls der Kommunikationsknoten GK4 jedoch einen geringeren Leistungsumfang als der Kommunikationsknoten GK3 aufweist, ist mit dem Wechsel des Endgerätes EG2 von dem Kommunikationsknoten GK3 zum Kommunikationsknoten GK4 hin eine Funktionsminderung eingetreten. In solchen Fällen veranlasst der Verwaltungs-Server VS nach Wiederherstellung der Erreichbarkeit des Kommunikationsknotens GK3, dass die in den Verwaltungs-Server VS gespeicherten Konfigurationsdaten des Kommunikationsknotens GK3 wiederum zu diesem wiederhergestellten Kommunikationsknoten GK3 übertragen werden und dieser seine ursprüngliche Funktion wieder aufnimmt. Alternativ kann der Verwaltungs-Server VS diese Konfigurationsdaten auch zu einem anderen Ersatz-Kommunikationsknoten mit entsprechendem Leistungsumfang des Kommunikationsnetzwerkes übermitteln, um die Funktionalität des Endgerätes EG2 wieder im vollen Umfang zu gewährleisten.

Der Verwaltungs-Server VS umfasst weiterhin eine Anpassungseinheit, die Konfigurationsdaten in ihrem Format umwandeln kann. Das ist notwendig, weil in Kommunikationsknoten unterschiedlichen Typs die Konfigurationsdaten auch in unterschiedlicher Weise gespeichert sind. Falls nun die in Kopie gespeicherten Konfigurationsdaten mit einem Kommunikationsknoten anderen Typs verwendet werden sollen, wird von dem Verwaltungs-Server VS eine entsprechende Umkonfigurierung der Konfigurationsdaten vorgenommen.

Durch die Übertragung der kompletten Konfigurationsdaten des ausgefallenen Kommunikationsknotens GK3 zu dem Kommunikationsknoten GK4 werden alle an dem Kommunikationsknoten GK3 angemeldeten Endgeräte zu dem Ersatz-Kommunikationsknoten GK4 übertragen, so dass auch bei einer Vielzahl angemeldeter Endgeräte der Schritt zur Übertragung von Konfigurationsdaten nur einmal ausgeführt werden muss. Wenn also nach dem Endgerät EG3 weitere (nicht dargestellte) Endgeräte den "Verlust" ihres Heimat-Kommunikationsknotens GK3 feststellen und eine entsprechende Statusinformation zu dem Verwaltungs-Server VS versenden, kann dieser direkt mit der Netzwerkadresse (IP-Adresse) des bereits konfigurierten Ersatz-Kommunikationsknotens GK4 antworten.

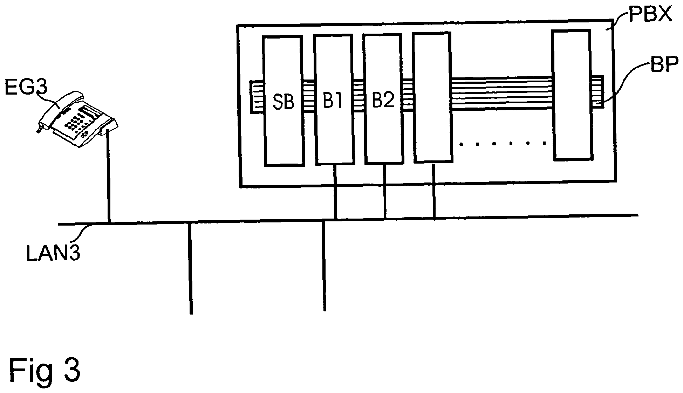

In der Figur 3 ist als drittes Ausführungsbeispiel ein Kommunikationsnetzwerk mit einer Datenleitung LAN3 gezeigt, an der das Endgerät EG3 und die Kommunikationsanlage PBX angeschlossen sind. Bei der Kommunikationsanlage PBX handelt es sich um eine modular aufgebaute Kommunikationsanlage, bei der verschiedene Baugruppen SB, B1, B2 über eine Grundplatte BP (Backplane) mit einem elektrischen Datenbus miteinander verbunden sind. In der Figur 3 sind in der Kommunikationsanlage PBX drei Baugruppen SB, B1, B2 gezeigt, wobei es sich dabei um die Steuerungsbaugruppe SB und die Kommunikationsbaugruppen B1, B2 handelt. Die Kommunikationsbaugruppen B1, B2 dienen als Kommunikationsknoten für das Endgerät EG3 und weitere Endgeräte (hier nicht gezeigt) in dem Kommunikationsnetzwerk. Die Kommunikationsbaugruppen B1, B2 sind jeweils an der Datenleitung LAN3 angeschlossen.

Neben den Sprachdaten-Kommunikationsbaugruppen B1, B2 sind in der Kommunikationsanlage PBX noch weitere, hier nicht dargestellte Baugruppen zum Anschluß leitungsvermittelter Endgeräte sowie solche für den Zugang zu leitungsvermittelten Kommunikationsnetzwerken, also Gateway-Baugruppen, eingesteckt.

Das Endgerät EG3 ist, zusammen mit anderen, hier nicht dargestellten Endgeräten an der Kommunikationsbaugruppe B1 angemeldet. Zur Anmeldung und für den laufenden Betrieb ist in dem Endgerät EG3 die Netzwerkadresse der Kommunikationsbaugruppe B1 gespeichert. Die Kommunikationsbaugruppe B2 befindet sich im passiven Betrieb und wird in der Kommunikationsanlage PBX als Ersatzbaugruppe für die aktive Kommunikationsbaugruppe B1 und andere, hier nicht dargestellte aktive Kommunikationsbaugruppen vorgehalten.

Die Steuerungsbaugruppe SB steuert die Kommunikationsbaugruppen B1, B2. Wenn eine der Kommunikationsbaugruppen B1, B2 gestartet ("hochgefahren") wird, wird von der Steuerungsbaugruppe SB zu der jeweiligen Kommunikationsbaugruppe B1, B2 zunächst die erforderliche Betriebssoftware übertragen. Mit dieser Betriebssoftware werden die Kommunikationsbaugruppen B1, B2 gestartet. Nach dem Start überträgt die Steuerungsbaugruppe zu der jeweiligen Kommunikationsbaugruppe B1, B2 die Konfigurationsdaten, die die Endgeräte, die jeweils von der Kommunikationsbaugruppe B1, B2 verwaltet werden, betreffen. Schließlich wird die jeweilige Kommunikationsbaugruppe B1, B2 von der Steuerungsbaugruppe SB durch Zuweisung der jeweiligen Netzwerkadresse der Kommunikationsbaugruppe B1, B2 aktiviert. Die soeben geschilderte Prozedur wird auch als "Laden" der Baugruppe bezeichnet.

Im normalen, fehlerfreien Betriebszustand des in Figur 3 dargestellten Kommunikationsnetzwerkes wird zunächst nur die Kommunikationsbaugruppe B1 mit Betriebssoftware, Konfigurationsdaten und einer Netzwerkadresse geladen. Die Kommunikationsbaugruppe B2 verbleibt zunächst passiv (inaktiv). Da in dem Endgerät EG3 die der Kommunikationsbaugruppe B1 zugewiesene Netzwerkadresse gespeichert ist, kann das Endgerät EG3 sich bei dieser Kommunikationsbaugruppe B1 anmelden. Mit der Anmeldung und der Einrichtung des Endgerätes EG3 werden in der Kommunikationsbaugruppe B1 Konfigurationsdaten geschaffen bzw. verändert, die in regelmäßigen Zeitabständen in Kopie in einem Speicher der Steuerungsbaugruppe gesichert werden.

Die Steuerungsbaugruppe SB überwacht in regelmäßigen Zeitabständen die Kommunikationsbaugruppe B1 und fragt dazu regelmäßig von dieser Kommunikationsbaugruppe B1 eine Statusmeldung ab. Die Kommunikationsbaugruppe B1 wiederum überprüft regelmäßig, ob ihre Verbindung zu der Datenleitung LAN3 und zu den bei ihr angemeldeten Endgeräten, in diesem Fall dem exemplarisch betrachteten Endgerät EG3, besteht. Die Information darüber, ob die Anbindung an die Datenleitung LAN3 bzw. die Verbindung zu den angemeldeten Endgeräten besteht, wird von der Kommunikationsbaugruppe B1 bei den Abfragen der Steuerungsbaugruppe SB zu der Steuerungsbaugruppe SB übertragen. Falls die Steuerungsbaugruppe SB keine Statusmeldung von der Kommunikationsbaugruppe B1 empfangen kann, bzw. aus einer der empfangenen Statusmeldungen eine Fehlfunktion der Kommunikationsbaugruppe B1 oder ihres Anschlusses an das Datennetz hervorgeht, erkennt die Steuerungsbaugruppe SB den Fehlerfall dieser Kommunikationsbaugruppe B1. Falls die Steuerungsbaugruppe nun noch eine Verbindung zu der Kommunikationsbaugruppe B1 hat, schaltet sie die Kommunikationsbaugruppe B1 in den Betriebszustand "inaktiv". Falls keine Verbindung mehr zu der Kommunikationsbaugruppe B1 besteht, geht die Steuerungsbaugruppe ohnehin von einem inaktiven Betriebszustand der Kommunikationsbaugruppe B1 aus. In beiden Fällen erzeugt die Steuerungsbaugruppe eine interne Statusinformation über die Nichterreichbarkeit bzw. Fehlfunktion und lädt nun die Kommunikationsbaugruppe B2 mit Betriebssoftware und den Konfigurationsdaten, die ursprünglich von der Kommunikationsbaugruppe B1 als Kopie gesichert wurden. Schließlich weist die Steuerungsbaugruppe SB der Kommunikationsbaugruppe B2 diejenige Netzwerkadresse zu, die ursprünglich von der Kommunikationsbaugruppe B1 verwendet wurde, und schaltet damit die Kommunikationsbaugruppe B2 in den aktiven Betriebszustand. Das Endgerät EG3 verwendet nun, ohne dass in ihm eine andere Netzwerkadresse für die zu verwendende Kommunikationsbaugruppe eingespeichert werden musste, die Kommunikationsbaugruppe B2. Dabei ist keine Änderung des möglichen Leistungsumfanges eingetreten.

In Kommunikationsanlagen PBX mit einer größeren Anzahl aktiver Kommunikationsbaugruppen braucht nur eine inaktive Kommunikationsbaugruppe als Ersatzbaugruppe vorgehalten werden, weil diese Ersatz-Kommunikationsbaugruppe die Funktionalität einer beliebigen der aktiven Kommunikationsbaugruppen übernehmen kann. Im vorliegenden Ausführungsbeispiel sind alle Kommunikationsbaugruppen B1, B2 vom gleichen Typ, so dass eine Umwandlung des Formates der in Kopie gespeicherten und zu der Kommunikationsbaugruppe B2 übertragenen Konfigurationsdaten nicht notwendig ist. Falls davon abweichend Kommunikationsbaugruppen unterschiedlichen Typs eingesetzt werden, wandelt ein auf der Steuerungsbaugruppe SB ablaufendes Anpassungs-Programm das Format der Konfigurationsdaten vor dem Laden der Kommunikationsbaugruppe B2 um.

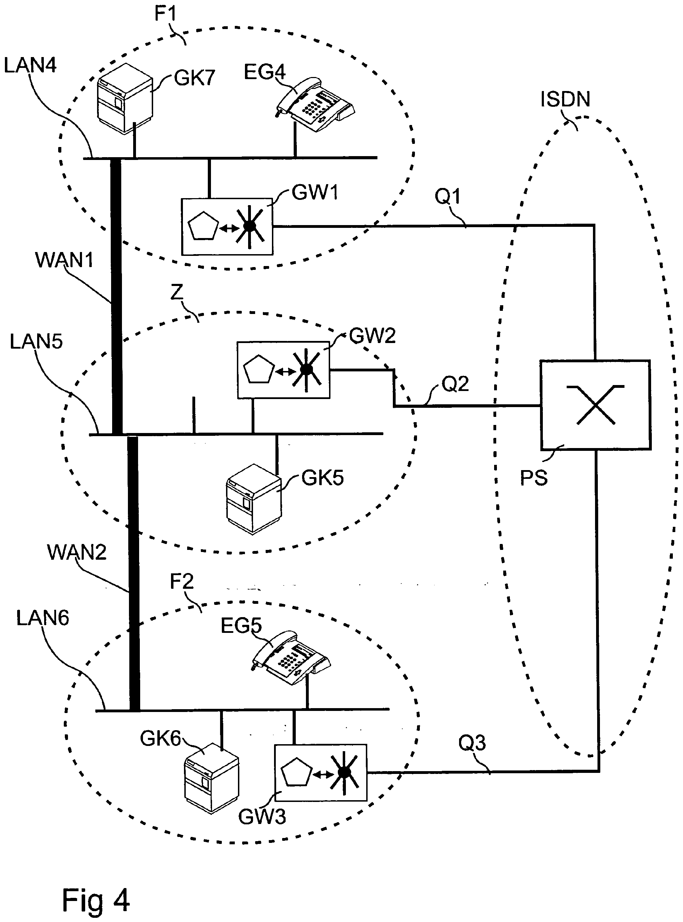

In Figur 4 ist als viertes Ausführungsbeispiel ein verteiltes Kommunikationsnetzwerk mit einem zentralen Standort Z und zwei Filial-Standorten F1, F2 gezeigt, wie es beispielsweise für Banken oder Versicherungsgesellschaften mit einer Zentrale und mehreren Filialen eingesetzt wird.

In den Filialstandorten F1, F2 werden die Datennetze LAN4, LAN6 betrieben, und in dem zentralen Standort Z wird das Datennetz LAN5 betrieben. In dem Filial-Standort F1 sind an dem Datennetz LAN4 das Endgerät EG4, der Kommunikationsknoten GK7, der als Gatekeeper ausgebildet ist, und das Gateway GW1 angeschlossen. Über das Gateway GW1 ist der Filial-Standort F1 an das öffentliche leitungsvermittelte Kommunikationsnetzwerk ISDN angeschlossen. Entsprechend sind an dem Datennetz LAN6 des Filial-Standortes F2 das Endgerät EG5, der Kommunikationsknoten GK6 (ebenfalls als Gatekeeper ausgebildet) und das Gateway GW3 angeschlossen, wobei letzteres über die Kommunikationsleitung Q3 mit dem Kommunikationsnetzwerk ISDN verbunden ist. Schließlich ist der zentrale Standort Z mit dem Datennetz LAN5 ausgerüstet, wobei an dem Datennetz LAN5 der Kommunikationsknoten GK5 und das Gateway GW2 angeschlossen sind, wobei das Gateway GW2 über die Kommunikationsleitung Q2 an das öffentliche Kommunikationsnetzwerk ISDN angeschlossen ist. Die Datennetze LAN4 und LAN5 sind über die Weitverkehrs-Datenleitung WAN1 miteinander verbunden, und das Datennetz LAN6 ist mit dem Datennetz LAN5 über die Weitverkehrs-Datenleitung WAN2 verbunden. Das öffentliche Kommunikationsnetzwerk verfügt über zumindest einen Netzknoten PS ("public switch"), mit dem die Kommunikationsleitungen Q1, Q2, Q3 und (hier nicht dargestellte) externe Teilnehmeranschlüsse verknüpfbar sind.

Die Gateways GW1, GW2, GW3 stellen jeweils das Bindeglied des jeweiligen Datennetzes LAN4, LAN5, LAN6 zu dem öffentlichen Kommunikationsnetzwerk ISDN dar. Gesteuert werden diese Gateways GW1, GW2, GW3 von dem jeweiligen Kommunikationsknoten (Gatekeeper) GK7, GK5, GK6 in dem jeweiligen Datennetz LAN4, LAN5, LAN6. Im normalen (störungsfreien) Betriebsfall des dargestellten Kommunikationsnetzwerkes werden alle Kommunikationsverbindungen zwischen den Standorten F1, F2, Z unter Nutzung der Weitverkehrs-Datenleitung WAN1 und WAN2 abgewickelt. Verbindungen mit externen Teilnehmern, also mit Teilnehmern, die das öffentliche Kommunikationsnetzwerk ISDN nutzen, werden ausschließlich über die Kommunikationsleitung Q2 und das Gateway GW2 geführt.

Die Endgeräte EG4, EG5 sind bei dem Kommunikationsknoten GK5 angemeldet, in dem auch die diesen Endgeräten EG4, EG5 zugeordneten Konfigurationsdaten gespeichert sind. Wenn also von dem Endgerät EG4 oder dem Endgerät EG5 mit einem externen Teilnehmer kommuniziert wird, dann wird diese Gesprächsverbindung im Falle des Endgerätes EG4 über das Datennetz LAN4, dann über die Weitverkehrs-Datenleitung WAN1, dann über das Datennetz LAN5 und schließlich über das Gateway GW2 und die Kommunikationsleitung Q2 zu dem Teilnehmer des Kommunikationsnetzwerkes ISDN geführt. Analog werden Gespräche zwischen dem Endgerät EG5 und einem externen Teilnehmer unter Nutzung des Datennetzes LAN6, der Weitverkehrs-Datenleitung WAN2, über das Datennetz LAN5, das Gateway GW2, die Kommunikationsleitung Q2 und schließlich über die - hier nicht dargestellten - vermittlungstechnischen Einrichtungen des öffentlichen Kommunikationsnetzwerks ISDN geführt.

In dem Filial-Standort F1 werden also das Gateway GW1 und der zur Steuerung des Gateways GW1 eingesetzte Kommunikationsknoten GK7 weder für externe Verbindungen noch für die Verbindungen zu dem Zentralstandort Z verwendet. Analog dazu werden auch in dem Filial-Standort F2 die Netzwerkkomponenten Gateway GW3 und Kommunikationsknoten GK6 im störungsfreien Betrieb des Netzwerks nicht verwendet. Die den Endgeräten EG4, EG5 zugeordneten Konfigurationsdaten sind, wie bereits erwähnt, im Kommunikationsknoten GK5 gespeichert. Eine Kopie der Konfigurationsdaten, die das Endgerät EG4 betreffen, sind in dem Kommunikationsknoten GK7 gespeichert. Der Kommunikationsknoten GK7 ist damit so vorprogrammiert, dass das Endgerät EG4 ersatzweise statt an dem Kommunikationsknoten GK5 an dem Kommunikationsknoten GK7 betrieben werden kann. Falls, wie im vorliegenden Ausführungsbeispiel, der Kommunikationsknoten GK7 als Notsystem mit einer geringeren Leistungsfähigkeit und mit einem geringerem Leistungsumfang als der Kommunikationsknoten GK5 ausgestattet ist, ist seine Konfiguration bezüglich des Endgerätes EG4 natürlich eingeschränkt. Beispielsweise sind in dem Kommunikationsknoten GK7 keine Anrufübernahme-Gruppen konfigurierbar, die Teilnehmer aus dem gesamten Netzwerk bestehend aus den Standorten F1, F2, Z zusammenfassen.

Zur Anmeldung bei dem Kommunikationsknoten GK5 und zur Nutzung dieses Kommunikationsknotens GK5 ist in dem Endgerät EG4 die Netzwerkadresse des Kommunikationsknotens GK5 eingespeichert. Als eine zweite Netzwerkadresse für den Störungsfall ist in dem Endgerät EG4 zusätzlich die Netzwerkadresse des Kommunikationsknotens GK7 eingespeichert. Eine in dem Endgerät EG4 installierte Überwachungsfunktion überprüft in regelmäßigen Zeitabständen, ob der Kommunikationsknoten GK5 erreichbar ist. Falls diese Erreichbarkeit nicht mehr gegeben ist, beispielsweise aufgrund eines Ausfalls der Weitverkehrs-Datenleitung WAN1 oder aufgrund eines Ausfalls des Kommunikationsknotens GK5, wird in dem Endgerät EG4 eine entsprechende Statusinformation erzeugt und es meldet sich bei dem Kommunikationsknoten GK7 an. Der Kommunikationsknoten GK7 ist derart programmiert, dass alle Verbindungen des Endgerätes EG4, die bislang über die Weitverkehrs-Datenleitung WAN1 und den Kommunikationsknoten GK5 geführt wurden, nunmehr unter Nutzung des Gateways GW1 und der Kommunikationsleitung Q1 über das öffentliche Kommunikationsnetzwerk ISDN geführt werden. Damit ist trotz der Nichterreichbarkeit des Kommunikationsknotens GK5 das Endgerät EG4 weiterhin einsetzbar. In analoger Weise ist auch das Endgerät EG5 zur ersatzweisen Nutzung des Kommunikationsknotens GK6 und des Gateways GW3 anstelle der Weitverkehrs-Datenleitung WAN3 und des zentralen Kommunikationsknotens GK5 programmiert.

Der nunmehr ersatzweise verwendete Kommunikationsknoten GK7 überprüft in regelmäßigen Zeitabständen, ob der Kommunikationsknoten GK5 wieder erreichbar ist. Sobald dies der Fall ist, entzieht der Kommunikationsknoten GK7 dem Endgerät EG4 die Berechtigung zu seiner Nutzung. Infolgedessen startet das Endgerät EG4 einen erneuten Anmeldeversuch, wiederum in der Reihenfolge, dass zuerst eine Anmeldung bei dem Kommunikationsknoten GK5 und erst dann ein Anmeldeversuch bei dem Kommunikationsknoten GK7 gestartet wird. Da aber der Kommunikationsknoten GK5 wieder erreichbar ist, wird der erste Anmeldeversuch zum Erfolg führen, so dass die ursprüngliche Konfiguration des Kommunikationsnetzwerkes wieder hergestellt ist.

Alternativ kann auch das Endgerät EG4 selber in regelmäßigen Zeitabständen prüfen, ob der Kommunikationsknoten GK5 wieder erreichbar ist, und sich - falls ja - von dem verwendeten Kommunikationsknoten GK7 abmelden und bei dem Kommunikationsknoten GK5 wieder anmelden.

Kommende Kommunikationsverbindungen (Gespräche) für das Endgerät EG4 von einem Teilnehmer des öffentlichen Kommunikationsnetzwerkes ISDN werden von dem öffentlichen Netzknoten PS über die Kommunikationsleitung Q1 zu dem Gateway GW1 geleitet. Das Gateway GW "übersetzt" das Gespräch gesteuert durch den Kommunikationsknoten GK7 als Gatekeeper in das Datennetz LAN4. Das Gespräch wird über die Weitverkehrs-Datenleitung WAN1 an das Datennetz LAN5 und damit in die "Zuständigkeit" des Kommunikationsknotens GK5 geleitet. An dem Kommunikationsknoten GK5 ist das Endgerät EG4 angemeldet, so dass das Gespräch nun bei diesem Endgerät EG4, wiederum über die Datennetze LAN5, LAN4 und die Weitverkehrs-Datenleitung WAN1, signalisiert wird. Im Fehlerfall, also beispielsweise bei Ausfall der Weitverkehrs-Datenleitung WAN1, meldet sich nicht nur das Endgerät EG4 bei dem Kommunikationsknoten GK7 an, sondern der Kommunikationsknoten GK7 und somit das Gateway GW1 werden so umgeschaltet, dass eingehende Kommuniktionsverbindungen direkt vom Kommunikationsknoten GK7 zu dem Endgerät EG4 signalisiert werden.

## Patentansprüche

1. Verfahren zum wechselweisen Betrieb eines Endgerätes (EG1; EG2; EG3; EG4) an zumindest zwei Kommunikationsknoten (GK1, GK2; GK3, GK4; B1, B2; GK5, GK6),
wobei die Kommunikationsknoten und das Endgerät (EG1; EG2; EG3; EG4) in einem Kommunikationsnetzwerk angeordnet sind, wobei zum Betrieb des Endgerätes (EG1; EG2; EG3; EG4) an einem ersten der Kommunikationsknoten (GK1; GK3; B1; GK5) mit einer ersten Adresse das Endgerät (EG1; EG2; EG3; EG4) an diesem ersten Kommunikationsknoten (GK1; GK3; B1; GK5) angemeldet wird,
wobei nach der Anmeldung eine logische Verbindung zwischen dem Endgerät (EG1; EG2; EG3; EG4) und dem ersten Kommunikationsknoten (GK1; GK3; B1; GK5) besteht, und
wobei die erste Adresse in dem Endgerät (EG1; EG2; EG3; EG4) zur Anmeldung gespeichert ist,
wobei in dem ersten Kommunikationsknoten (GK1; GK3; B1; GK5) das Endgerät (EG1; EG2; EG3; EG4) betreffende zum Betrieb des Endgerätes (EG1; EG2; EG3; EG4) notwendige Konfigurationsdaten gespeichert sind,
dass die Erreichbarkeit des ersten Kommunikationsknotens (GK1; GK3; B1; GK5) überwacht wird, **dadurch gekennzeichnet,**
**dass** bei Nichterreichbarkeit des ersten Kommunikationsknotens (GK1; GK3; B1; GK5)
a) eine Statusinformation über die Nichterreichbarkeit erzeugt wird,
b) aufgrund der Statusinformation eine logische Verbindung zwischen dem Endgerät (EG1; EG2; EG3; EG4) und einem zweiten Kommunikationsknoten (GK2; GK4; B2; GK7) aufgebaut wird,
c) die notwendigen Konfigurationsdaten zum Betrieb des Endgerätes (EG1; EG2; EG3; EG4) an dem zweiten Kommunikationsknoten (GK2; GK4; B2; GK7) zu dem zweiten Kommunikationsknoten (GK2; GK4; B2; GK7) übertragen werden, und
d) der Betrieb des Endgerätes (EG1; EG2; EG3; EG4) automatisch an dem zweiten Kommunikationsknoten (GK2; GK4; B2; GK7), dem eine zweite Adresse zugeordnet ist, erfolgt.

2. Verfahren nach Patentanspruch 1,
**dadurch gekennzeichnet,**
**dass** als das Kommunikationsnetzwerk ein Sprachdatennetz verwendet wird,
**dass** als das Endgerät (EG1; EG2; EG3; EG4) ein Sprachdaten-Endgerät verwendet wird, und
**dass** als die Kommunikationsknoten (GK1, GK2; GK3, GK4; B1, B2; GK5, GK7) Gatekeeper verwendet werden.

3. Verfahren nach einem der vorhergehenden Patentansprüche,
**dadurch gekennzeichnet,**
**dass** in dem Endgerät (EG1) eine Kopie der Konfigurationsdaten gespeichert wird, und
**dass** nach der Anmeldung des Endgerätes (EG1) bei dem zweiten Kommunikationsknoten (GK2) die Kopie der Konfigurationsdaten von dem Endgerät (EG1) zu dem zweiten Kommunikationsknoten (GK2) übertragen wird und von dem zweiten Kommunikationsknoten (GK2) zum Betrieb des Endgerätes (EG1) verwendet wird.

4. Verfahren nach einem der vorhergehenden Patentansprüche,
**dadurch gekennzeichnet,**
**dass** in dem Endgerät (EG1) die zweite Adresse gespeichert wird, und
**dass** das Endgerät (EG1) sich bei Nichterreichbarkeit des ersten Kommunikationsknotens (GK1) anhand der gespeicherten zweiten Adresse bei dem zweiten Kommunikationsknoten (Gk2) anmeldet.

5. Verfahren nach Patentanspruch 4,
**dadurch gekennzeichnet,**
**dass** in dem Kommunikationsnetzwerk weitere Kommunikationsknoten (GK1, GK2) mit jeweils einer Adresse angeordnet sind, dass in dem Endgerät (EG1) eine sortierte Liste mit den Adressen der Kommunikationsknoten (GK1, GK2) gespeichert wird, und
**dass** bei Nichterreichbarkeit des ersten Kommunikationsknotens (GK1) die Liste der Kommunikationsknoten (Gk1, GK2) solange durch Anmeldeversuche des Endgerätes (EG1) abgearbeitet wird, bis eine Anmeldung bei einem der Kommunikationsknoten (GK1, GK2) erfolgt ist.

6. Verfahren nach einem der Patentansprüche 1 oder 2,
**dadurch gekennzeichnet,**
**dass** in dem Kommunikationsnetzwerk ein Verwaltungsserver (VS; SB) mit einer Adresse betrieben wird, in dem die zweite Adresse gespeichert ist,
**dass** in dem Endgerät (EG2; EG3) die Adresse des Verwaltungsservers (VS; SB) gespeichert wird,
**dass** bei Nichterreichbarkeit des ersten Kommunikationsknotens (GK3; B1) von dem Endgerät (EG2; EG3) eine Abfragenachricht zu dem Verwaltungsserver (VS; SB) gesendet wird,
**dass** von dem Verwaltungsserver (VS; SB) zu dem Endgerät (EG2; EG3) in einer Antwortnachricht die zweite Adresse übermittelt wird, und
**dass** sich das Endgerät (EG2; EG3) anhand der übermittelten zweiten Adresse bei dem zweiten Kommunikationsknoten (GK4; B2) anmeldet.

7. Verfahren nach Patentanspruch 6,
**dadurch gekennzeichnet,**
**dass** in dem Verwaltungsserver (VS; SB) eine Kopie der Konfigurationsdaten gespeichert wird, und
**dass** nach Anmeldung des Endgerätes (EG2; EG3) bei dem zweiten Kommunikationsknoten (GK4; B2) die Kopie der Konfigurationsdaten von dem Verwaltungsserver (VS; SB) zu dem zweiten Kommunikationsknoten (GK4; B2) übertragen wird und von dem zweiten Kommunikationsknoten (GK4; B2) zum Betrieb des Endgerätes (EG2; EG3) verwendet wird.

8. Verfahren nach einem der vorhergehenden Patentansprüche,
**dadurch gekennzeichnet,**
**dass** in dem Kommunikationsnetzwerk ein Verwaltungsserver (SB) betrieben wird, in dem eine Kopie der Konfigurationsdaten und die erste Adresse gespeichert wird,
**dass** von dem Verwaltungsserver (SB) die Erreichbarkeit des ersten Kommunikationsknotens (B1) überwacht wird, und
**dass** von dem Verwaltungsserver (SB) bei Nichterreichbarkeit des ersten Kommunikationsknotens (B1) die Kopie der Konfigurationsdaten und die gespeicherte erste Adresse zu dem zweiten Kommunikationsknoten (B2) übertragen wird,
wobei dem zweiten Kommunikationsknoten (B2) die erste Adresse zugewiesen wird und
wobei von dem zweiten Kommunikationsknoten (B2) anhand der empfangenen Kopie der Konfigurationsdaten für das Endgerät (EG3) und durch Zuweisung der ersten Adresse die Funktion des ersten Kommunikationsknotens (B1) ausgeübt wird.

9. Verfahren nach Patentanspruch 7 oder 8,
**dadurch gekennzeichnet,**
**dass** die Konfigurationsdaten in dem ersten Kommunikationsknoten (GK3; B1) in einem ersten Format und in dem zweiten Kommunikationsknoten (GK4; B2) in einem zweiten Format verwendet werden, und
**dass** die zu dem zweiten Kommunikationsknoten (GK4; B2) übertragenen Konfigurationsdaten vor der Übertragung von dem ersten Format in das zweite Format umgewandelt werden.

10. Verfahren nach Patentanspruch 8 oder 9,
**dadurch gekennzeichnet,**
**dass** als die Kommunikationsknoten (B1, B2) jeweils eine Kommunikationsbaugruppe (B1, B2) einer modular aufgebauten Kommunikationsanlage (PBX) verwendet wird,
**dass** als Verwaltungsserver (SB) eine Steuerungsbaugruppe der modular aufgebauten Kommunikationsanlage (PBX) verwendet wird, und
**dass** nach der Inbetriebnahme der Kommunikationsbaugruppen jeweils die Übertragung der Konfigurationsdaten und der jeweiligen Adresse von der Steuerungsbaugruppe zu der jeweiligen Kommunikationsbaugruppe erfolgt.

11. Verfahren nach einem der vorhergehenden Patentansprüche,
**dadurch gekennzeichnet,**
**dass** bei Betrieb des Endgerätes (EG1; EG2; EG3; EG4) an dem zweiten Kommunikationsknoten (GK2; GK4; B2; GK7) die Nichterreichbarkeit des ersten Kommunikationsknotens (GK1; GK3; B1; GK5) überwacht wird, und
**dass** das Endgerät (EG1; EG2; EG3; EG4) bei dem zweiten Kommunikationsknoten (GK2; GK4; B2; GK7) abgemeldet und wieder bei dem ersten Kommunikationsknoten (GK1; GK3; B1; GK5) angemeldet wird, nachdem der erste Kommunikationsknoten (GK1; GK3; B1; GK5) wieder erreichbar ist.

12. Verfahren nach Patentanspruch 11,
**dadurch gekennzeichnet,**
**dass** die Überwachung durch den zweiten Kommunikationsknoten (GK2; GK4; B2; GK7) erfolgt.

13. Verfahren nach einem der Patentansprüche 1 bis 10,
**dadurch gekennzeichnet,**
**dass** beim Betrieb des Endgerätes (EG1; EG2; EG3; EG4) an dem zweiten Kommunikationsknoten (GK2; GK4; B2; GK7) der erste Kommunikationsknoten (GK1; GK3; B1; GK5) durch den zweiten Kommunikationsknoten (GK2; GK4; B2; GK7) ersetzt wird.

14. Kommunikationsanordnung mit
einem Endgerät (EG1; EG2; EG3; EG4) zum wechselweisen Betrieb an zumindest zwei Kommunikationsknoten (GK1, GK2; GK3, GK4; B1, B2; GK5, GK7), und
mit einem Kommunikationsnetzwerk, in dem das Endgerät (EG1; EG2; EG3; EG4) und die Kommunikationsknoten (GK1, GK2; GK3, GK4; B1, B2; GK5, GK7) angeordnet sind,
wobei zum Betrieb des Endgerätes (EG1; EG2; EG3; EG4) an einem ersten der Kommunikationsknoten (GK1; GK3; B1; GK5) mit einer ersten Adresse das Endgerät (EG1; EG2; EG3; EG4)an diesem ersten Kommunikationsknoten (GK1; GK3; B1; GK5)angemeldet ist,
wobei die erste Adresse in dem Endgerät (EG1; EG2; EG3; EG4) zur Anmeldung gespeichert ist, und
wobei in dem ersten Kommunikationsknoten (GK1; GK3; B1; GK5) das Endgerät (EG1; EG2; EG3; EG4) betreffende zum Betrieb des Endgerätes (EG1; EG2; EG3; EG4) notwendige Konfigurationsdaten gespeichert sind,
**dadurch gekennzeichnet,**
**dass** in dem Kommunikationsnetzwerk ein Verwaltungsserver (VS, SB) angeordnet ist,
**dass** in dem Verwaltungsserver (VS, SB) eine Kopie der notwendigen Konfigurationsdaten gespeichert ist,
**dass** in dem Kommunikationsnetzwerk eine Überwachungsvorrichtung vorhanden ist, die die Erreichbarkeit des ersten Kommunikationsknotens (GK1; GK3; B1; GK5) überwacht,
**dass** Mittel vorgesehen sind zur Übertragung der Kopie der notwendigen Konfigurationsdaten zu einem zweiten Kommunikationsknoten (GK2; GK4; B2; GK7) im Falle der Nichterreichbarkeit des ersten Kommunikationsknotens (GK1; GK3; B1; GK5), so dass der Betrieb des Endgerätes bei Nichterreichbarkeit des ersten Kommunikationsknotens (GK1; GK3; B1; GK5) an dem zweiten Kommunikationsknoten (GK2; GK4; B2; GK7) erfolgt.

15. Kommunikationsanordnung nach Patentanspruch 14,
**dadurch gekennzeichnet,**
**dass** die Konfigurationsdaten in dem ersten Kommunikationsknoten (GK3; B1) in einem ersten Format und in dem zweiten Kommunikationsknoten (GK4; B2) in einem zweiten Format gespeichert sind, und
**dass** der Verwaltungsserver (VS) mit einer Anpassungseinheit ausgestattet ist, die die Konfigurationsdaten vor der Übertragung zu dem zweiten Kommunikationsknoten (GK4; B2) von dem ersten Format in das zweite Format umwandelt.

## Claims

1. A method for redundant operation of an end terminal (EG1;
EG2; EG3; EG4) relative to at least two communication nodes (GK1; GK2; GK3; GK4; B1, B2; GK5, GK6),
wherein the communication nodes and the end terminal (EG1; EG2; EG3; EG4) are arranged in a communication network,
wherein to operate the end terminal (EG1; EG2; EG3; EG4) relative to a first of the communication nodes (GK1; GK3; B1; GK5), the end terminal (EG1; EG2; EG3; EG4) is registered with this first communication node (GK1; GK3; B1; GK5) using a first address, wherein once registration is complete, a logical connection exists between the end terminal (EG1; EG2; EG3; EG4) and the first communication node (GK1; GK3; B1; GK5), and
wherein the first address is stored in the end terminal (EG1; EG2; EG3; EG4) for registration,
wherein configuration data that relate to the end terminal (EG1; EG2; EG3; EG4) and are required for operating the end terminal (EG1; EG2; EG3; EG4) are stored in the first communication node (GK1; GK3; B1; GK5),
in that the accessibility of the first communication node (GK1; GK3; B1; GK5) is monitored, **characterized in that** if the first communication node (GK1; GK3; B1; GK5) is inaccessible
a) status information regarding the inaccessibility is generated,
b) based on the status information, a logical connection is established between the end terminal (EG1; EG2; EG3; EG4) and a second communication node (GK2; GK4; B2; GK7),
c) the configuration data required for operating the end terminal (EG1; EG2; EG3; EG4) relative to the second communication node (GK2; GK4; B2; GK7) are transferred to the second communication node (GK2; GK4; B2; GK7), and
d) the end terminal (EG1; EG2; EG3; EG4) is automatically operated relative to the second communication node (GK2; GK4; B2; GK7), to which a second address is assigned.

2. The method according to claim 1, **characterized in that** a voice data network is used as the communication network, **in that** a voice data end terminal is used as the end terminal (EG1; EG2; EG3; EG4), and
**in that** gatekeepers are used as the communication nodes (GK1; GK2; GK3; GK4; B1, B2; GK5, GK6).

3. The method according to any of the preceding claims, **characterized in that**
a copy of the configuration data is stored in the end terminal (EG1), and
**in that** once the end terminal (EG1) has been registered with the second communication node (GK2), the copy of the configuration data is transferred from the end terminal (EG1) to the second communication node (GK2) and is used by the second communication node (GK2) to operate the end terminal (EG1).

4. The method according to any of the preceding claims, **characterized in that**
the second address is stored in the end terminal (EG1), and if the first communication node (GK1) is not accessible, the end terminal (EG1) uses the stored second address to register with the second communication node (GK2).

5. The method according to claim 4,
**characterized in that**
additional communication nodes (GK1, GK2), each of which has an address, are arranged in the communication network, **in that** a sorted list with the addresses of the communication nodes (GK1, GK2) is stored in the end terminal (EG1), and
**in that** if the first communication node (GK1) is not accessible, the list of communication nodes (Gk1, GK2) is processed by attempts to register the end terminal (EG1) until registration with one of the communication nodes (GK1, GK2) is achieved.

6. The method according to either of claims 1 and 2, **characterized in that**
in the communication network, a management server (VS; SB) with an address is operated, in which the second address is stored,
**in that** the address of the management server (VS; SB) is stored in the end terminal (EG2; EG3),
**in that** if the first communication node (GK3; B1) cannot be accessed by the end terminal (EG2; EG3), a query message is sent to the management server (VS; SB),
**in that** the management server (VS; SB) transmits the second address to the end terminal (EG2; EG3) in a response message, and **in that** the end terminal (EG2; EG3) uses the transmitted second address to register with the second communication node (GK4; B2).

7. The method according to claim 6,
**characterized in that**
a copy of the configuration data is stored in the management server (VS; SB), and
**in that**, once the end terminal (EG2; EG3) has registered with the second communication node (GK4; B2), the copy of the configuration data is transferred from the management server (VS; SB) to the second communication node (GK4; B2), and is used by the second communication node (GK4; B2) to operate the end terminal (EG2; EG3).

8. The method according to any of the preceding claims, **characterized in that**
in the communication network a management server (SB) is operated, in which a copy of the configuration data and the first address is stored,
**in that** the accessibility of the first communication node (B1) is monitored by the management server (SB), and
**in that** if the first communication node (B1) is inaccessible, the management server (SB) transfers the copy of the configuration data and the stored first address to the second communication node (B2),
wherein the first address is assigned to the second communication node (B2), and
wherein based on the received copy of the configuration data for the end terminal (EG3) and as a result of the assignment of the first address, the function of the first communication node (B1) is carried out by the second communication node (B2).

9. The method according to claim 7 or 8, **characterized in that** the configuration data are used in a first format in the first communication node (GK3; B1) and in a second format in the second communication node (GK4; B2), and
**in that** the configuration data transferred to the second communication node (GK4; B2) are converted from the first format to the second format prior to the transfer.

10. The method according to claim 8 or 9, **characterized in that** as each of the communication nodes (B1, B2), a communication module (B1, B2) of a modularly constructed communication system (PBX) is used,
**in that** a control module of the modularly constructed communication system (PBX) is used as the management server (SB), and
**in that** once the communication modules are placed in operation, the configuration data are transferred, and the respective address is transferred from the control module to the respective communication module.

11. The method according to any of the preceding claims, **characterized in that**
during operation of the end terminal (EG1; EG2; EG3; EG4) relative to the second communication node (GK2; GK4; B2; GK7) the inaccessibility of the first communication node (GK1; GK3; B1; GK5) is monitored, and
**in that** the end terminal (EG1; EG2; EG3; EG4) is de-registered from the second communication node (GK2; GK4; B2; GK7) and is re-registered with the first communication node (GK1; GK3; B1; GK5) once the first communication node (GK1; GK3; B1; GK5) is accessible again.

12. The method according to claim 11, **characterized in that** monitoring is carried out by the second communication node (GK2; GK4; B2; GK7).

13. The method according to any of claims 1 to 10, **characterized in that**
during operation of the end terminal (EG1; EG2; EG3; EG4) relative to the second communication node (GK2; GK4; B2; GK7), the first communication node (GK1; GK3; B1; GK5) is replaced by the second communication node (GK2; GK4; B2; GK7) .

14. A communication assembly comprising an end terminal (EG1; EG2; EG3; EG4) for redundant operation relative to at least two communication nodes (GK1, GK2; GK3, GK4; B1, B2; GK5, GK7), and
a communication network, in which the end terminal (EG1; EG2; EG3; EG4) and the communication nodes (GK1, GK2; GK3, GK4; B1, B2; GK5, GK7) are arranged,
wherein for operating the end terminal (EG1; EG2; EG3; EG4) relative to a first of the communication nodes (GK1; GK3; B1; GK5), the end terminal (EG1; EG2; EG3; EG4) is registered with this first communication node (GK1; GK3; B1; GK5) using a first address,
wherein the first address is stored in the end terminal (EG1; EG2; EG3; EG4) for registration, and
wherein configuration data that relate to the operation of the end terminal (EG1; EG2; EG3; EG4) and are required for operating the end terminal (EG1; EG2; EG3; EG4) are stored in the first communication node (GK1; GK3; B1; GK5), **characterized in that**
a management server (VS, SB) is arranged in the communication network,
**in that** a copy of the required configuration data is stored in the management server (VS, SB),
**in that** a monitoring device which monitors the accessibility of the first communication node (GK1; GK3; B1; GK5) is provided in the communication network,
**in that** means are provided for transferring the copy of the required configuration data to a second communication node (GK2; GK4; B2; GK7) in the event that the first communication node (GK1; GK3; B1; GK5) is inaccessible, so that if the first communication node (GK1; GK3; B1; GK5) is inaccessible, the end terminal is operated relative to the second communication node (GK2; GK4; B2; GK7).

15. The communication assembly according to claim 14, **characterized in that**
the configuration data are stored in a first format in the first communication node (GK3; B1) and in a second format in the second communication node (GK4; B2), and
**in that** the management server (VS) is equipped with a converter that converts the configuration data from the first format to the second format prior to their transfer to the second communication node (GK4; B2).

## Revendications

1. Procédé d'opération redondante d'un terminal de communication (EG1 ; EG2 ; EG3 ; EG4) par rapport à au moins deux noeuds de communication (GK1 ; GK2 ; GK3 ; GK4 ; B1, B2 ; GK5, GK6),
dans lequel les noeuds de communication et le terminal de communication (EG1 ; EG2 ; EG3 ; EG4) sont agencés dans un réseau de communication,
dans lequel, pour opérer le terminal de communication (EG1 ; EG2 ; EG3 ; EG4) par rapport à un premier des noeuds de communication (GK1 ; GK3 ; B1 ; GK5), le terminal de communication (EG1 ; EG2 ; EG3 ; EG4) est inscrit auprès de ce premier noeud de communication (GK1 ; GK3 ; B1 ; GK5) au moyen d'une première adresse, dans lequel, une fois l'inscription achevée, il existe une connexion logique entre le terminal de communication (EG1 ; EG2 ; EG3 ; EG4) et le premier noeud de communication (GK1 ; GK3 ; B1 ; GK5), et
dans lequel la première adresse est stockée dans le terminal de communication (EG1 ; EG2 ; EG3 ; EG4) à des fins d'inscription,
dans lequel des données de configuration qui se rapportent au terminal de communication (EG1 ; EG2 ; EG3 ; EG4) et qui sont nécessaires pour opérer le terminal de communication (EG1 ; EG2 ; EG3 ; EG4) sont stockées dans le premier noeud de communication (GK1 ; GK3 ; B1 ; GK5),
en ce que l'accessibilité du premier noeud de communication (GK1 ; GK3 ; B1 ; GK5) est surveillée, **caractérisé en ce que**, si le premier noeud de communication (GK1 ; GK3 ; B1 ; GK5) est inaccessible,
a) des informations d'état relatives à l'inaccessibilité sont générées,
b) sur la base des informations d'état, une connexion logique est établie entre le terminal de communication (EG1 ; EG2 ; EG3 ; EG4) et un second noeud de communication (GK2 ; GK4 ; B2 ; GK7),
c) les données de configuration nécessaires pour opérer le terminal de communication (EG1 ; EG2 ; EG3 ; EG4) par rapport au second noeud de communication (GK2 ; GK4 ; B2 ; GK7) sont transférées au second noeud de communication (GK2 ; GK4 ; B2 ; GK7), et
d) le terminal de communication (EG1 ; EG2 ; EG3 ; EG4) est automatiquement opéré par rapport au second noeud de communication (GK2 ; GK4 ; B2 ; GK7) auquel une seconde adresse est attribuée.

2. Procédé selon la revendication 1, **caractérisé en ce que**
un réseau de données vocales est utilisé au titre du réseau de communication,
**en ce qu'**un terminal de communication de données vocales est utilisé au titre du terminal de communication (EG1 ; EG2 ; EG3 ; EG4), et
**en ce que** des portiers sont utilisés au titre des noeuds de communication (GK1 ; GK2 ; GK3 ; GK4 ; B1, B2 ; GK5, GK7).

3. Procédé selon l'une quelconque des revendications précédentes, **caractérisé en ce que**
une copie des données de configuration est stockée dans le terminal de communication (EG1), et
**en ce que**, une fois que le terminal de communication (EG1) a été inscrit auprès du second noeud de communication (GK2), la copie des données de configuration est transférée du terminal de communication (EG1) au second noeud de communication (GK2) et est utilisée par le second noeud de communication (GK2) pour opérer le terminal de communication (EG1) .

4. Procédé selon l'une quelconque des revendications précédentes, **caractérisé en ce que**
la seconde adresse est stockée dans le terminal de communication (EG1) et, si le premier noeud de communication (GK1) n'est pas accessible, le terminal de communication (EK1) utilise la seconde adresse stockée pour s'inscrire auprès du second noeud de communication (GK2).

5. Procédé selon la revendication 4, **caractérisé en ce que**
des noeuds de communication supplémentaires (GK1, GK2), qui ont chacun une adresse, sont agencés dans le réseau de communication,
**en ce qu'**une liste triée contenant les adresses des noeuds de communication (GK1, GK2) est stockée dans le terminal de communication (EG1), et
**en ce que**, si le premier noeud de communication (GK1) n'est pas accessible, la liste de noeuds de communication (GK1, GK2) est traitée en essayant d'inscrire le terminal de communication (EG1) jusqu'à ce qu'une inscription auprès d'un des noeuds de communication (GK1, GK2) soit effectuée.

6. Procédé selon l'une ou l'autre des revendications 1 et 2, **caractérisé en ce que**,
dans le réseau de communication est opéré un serveur de gestion (VS ; SB) ayant une adresse, dans lequel la seconde adresse étant stockée,
**en ce que** l'adresse du serveur de gestion (VS ; SB) est stockée dans le terminal de communication (EG2 ; EG3),
**en ce que**, si le terminal de communication (EG2 ; EG3) ne peut accéder au premier noeud de communication (GK3 ; B1), un message d'interrogation est envoyé au serveur de gestion (VS ; SB),
**en ce que** le serveur de gestion (VS ; SB) transmet la seconde adresse au terminal de communication (EG2 ; EG3) dans un message de réponse, et **en ce que** le terminal de communication (EG2 ; EG3) utilise la seconde adresse transmise pour s'inscrire auprès du second noeud de communication (GK4 ; B2).

7. Procédé selon la revendication 6, **caractérisé en ce que**
une copie des données de configuration est stockée dans le serveur de gestion (VS ; SB), et
**en ce que**, une fois que le terminal de communication (EG2 ; EG3) s'est inscrit auprès du second noeud de communication (GK4 ; B2), la copie des données de configuration est transférée du serveur de gestion (VS ; SB) au second noeud de communication (GK4 ; B2) et est utilisée par le second noeud de communication (GK4 ; B2) pour opérer le terminal de communication (EG2 ; EG3).

8. Procédé selon l'une quelconque des revendications précédentes, **caractérisé en ce que**
dans le réseau de communication est opéré un serveur de gestion (SB), dans lequel une copie des données de configuration et de la première adresse est stockée,
**en ce que** l'accessibilité du premier noeud de communication (B1) est surveillée par le serveur de gestion (SB), et
**en ce que**, si le premier noeud de communication (B1) est inaccessible, le serveur de gestion (SB) transfère la copie des données de configuration et la première adresse stockée au second noeud de communication (B2),
dans lequel la première adresse est attribuée au second noeud de communication (B2), et
dans lequel, sur la base de la copie reçue des données de configuration destinée au terminal de communication (EG3), et suite à l'attribution de la première adresse, la fonction du premier noeud de communication (B1) est assurée par le second noeud de communication (B2).

9. Procédé selon la revendication 7 ou 8, **caractérisé en ce que**
les données de configuration sont utilisées en un premier format dans le premier noeud de communication (GK3 ; B1) et en un second format dans le second noeud de communication (GK4 ; B2), et
**en ce que** les données de configuration transférées au second noeud de communication (GK4 ; B2) sont converties du premier format au second format avant le transfert.

10. Procédé selon la revendication 8 ou 9, **caractérisé en ce que**
un module de communication (B1, B2) d'un système de communication à structure modulaire (PBX) est utilisé au titre de chacun des noeuds de communication (B1, B2),
**en ce qu'**un module de commande du système de communication à structure modulaire (PBX) est utilisé au titre du serveur de gestion (SB), et
**en ce que**, une fois les modules de communication mis en opération, les données de configuration sont transférées et l'adresse respective est transférée du module de commande au module de communication respectif.

11. Procédé selon l'une quelconque des revendications précédentes, **caractérisé en ce que**
pendant l'opération du terminal de communication (EG1 ; EG2 ; EG3 ; EG4) par rapport au second noeud de communication (GK2 ; GK4 ; B2 ; GK7), l'inaccessibilité du premier noeud de communication (GK1 ; GK3 ; B1 ; GK5) est surveillée, et
**en ce que** le terminal de communication (EG1 ; EG2 ; EG3 ; EG4) est désinscrit du second noeud de communication (GK2 ; GK4 ; B2 ; GK7) et réinscrit auprès du premier noeud de communication (GK1 ; GK3 ; B1 ; GK5) une fois que le premier noeud de communication (GK1 ; GK3 ; B1 ; GK5) est à nouveau accessible.

12. Procédé selon la revendication 11, **caractérisé en ce que** la surveillance est assurée par le second noeud de communication (GK2 ; GK4 ; B2 ; GK7).

13. Procédé selon l'une quelconque des revendications 1 à 10, **caractérisé en ce que**
pendant l'opération du terminal de communication (EG1 ; EG2 ; EG3 ; EG4) par rapport au second noeud de communication (GK2 ; GK4 ; B2 ; GK7), le premier noeud de communication (GK1 ; GK3 ; B1 ; GK5) est remplacé par le second noeud de communication (GK2 ; GK4 ; B2 ; GK7).

14. Ensemble de communication comprenant un terminal de communication (EG1 ; EG2 ; EG3 ; EG4) permettant une opération redondante par rapport à au moins deux noeuds de communication (GK1, GK2 ; GK3, GK4 ; B1, B2 ; GK5, GK7), et
un réseau de communication dans lequel le terminal de communication (EG1 ; EG2 ; EG3 ; EG4) et les noeuds de communication (GK1, GK2 ; GK3, GK4 ; B1, B2 ; GK5, GK7) sont agencés,
dans lequel, pour opérer le terminal de communication (EG1 ; EG2 ; EG3 ; EG4) par rapport à un premier des noeuds de communication (GK1 ; GK3 ; B1 ; GK5), le terminal de communication (EG1 ; EG2 ; EG3 ; EG4) est inscrit auprès de ce premier noeud de communication (GK1 ; GK3 ; B1 ; GK5) au moyen d'une première adresse,
dans lequel la première adresse est stockée dans le terminal de communication (EG1 ; EG2 ; EG3 ; EG4) à des fins d'inscription, et
dans lequel des données de configuration qui se rapportent à l'opération du terminal de communication (EG1 ; EG2 ; EG3 ; EG4) et qui sont nécessaires pour opérer le terminal de communication (EG1 ; EG2 ; EG3 ; EG4) sont stockées dans le premier noeud de communication (GK1 ; GK3 ; B1 ; GK5),
**caractérisé en ce que**
un serveur de gestion (VS, SB) est agencé dans le réseau de communication,
**en ce qu'**une copie des données de configuration nécessaires est stockée dans le serveur de gestion (VS, SB),
**en ce qu'**un dispositif de surveillance qui surveille l'accessibilité du premier noeud de communication (GK1 ; GK3 ; B1 ; GK5) est agencé dans le réseau de communication,
**en ce que** des moyens sont prévus pour transférer la copie des données de configuration nécessaires à un second noeud de communication (GK2 ; GK4 ; B2 ; GK7) lorsque le premier noeud de communication (GK1 ; GK3 ; B1 ; GK5) est inaccessible, de sorte que si le premier noeud de communication (GK1 ; GK3 ; B1 ; GK5) est inaccessible, le terminal de communication est opéré par rapport au second noeud de communication (GK2 ; GK4 ; B2 ; GK7).

15. Ensemble de communication selon la revendication 14, **caractérisé en ce que**
les données de configuration sont stockées en un premier format dans le premier noeud de communication (GK3 ; B1) et en un second format dans le second noeud de communication (GK4 ; B2), et
**en ce que** le serveur de gestion (VS) est équipé d'un convertisseur qui convertit les données de configuration du premier format au second format avant leur transfert au second noeud de communication (GK4 ; B2).
